(19) Europäisches Patentamt / European Patent Office / Office européen des brevets

(11) **EP 3 237 260 B1**

(12) **FASCICULE DE BREVET EUROPEEN**

(45) Date de publication et mention de la délivrance du brevet:
**18.08.2021 Bulletin 2021/33**

(21) Numéro de dépôt: **15793876.2**

(22) Date de dépôt: **20.10.2015**

(51) Int Cl.:
**B60W 30/18** (2012.01)

(86) Numéro de dépôt international:
**PCT/FR2015/052809**

(87) Numéro de publication internationale:
**WO 2016/102789 (30.06.2016 Gazette 2016/26)**

(54) **PROCEDE DE COMMANDE D'UNE BOITE DE VITESSES AUTOMATIQUE POUR VEHICULE AUTOMOBILE**

VERFAHREN ZUR STEUERUNG DES AUTOMATIKGETRIEBES EINES KRAFTFAHRZEUGS

METHOD FOR CONTROLLING AN AUTOMATIC GEARBOX FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463090**

(43) Date de publication de la demande:
**01.11.2017 Bulletin 2017/44**

(73) Titulaire: **Renault s.a.s.**
**92100 Boulogne-Billancourt (FR)**

(72) Inventeurs:
• **LE-CAM, Florent**
  **F-91510 Lardy (FR)**
• **ROUDEAU, Frédéric**
  **F-94400 Vitry Sur Seine (FR)**
• **LEFEVRE, Aurélien**
  **F-92190 Meudon (FR)**

(56) Documents cités:
**WO-A1-2009/109826    DE-A1- 4 037 248**
**DE-A1- 19 524 914**

**Description**

L'invention a pour domaine technique la commande de boites de vitesses pour véhicules automobiles, et plus particulièrement la commande de boites de vitesses automatiques. L'art antérieure est décrite par exemple dans les documents DE 195 24 914 A et DE 40 37 248 A.

La commande de groupes motopropulseurs hybrides comprend généralement une fonction d'élaboration d'une consigne d'état de la chaîne cinématique.

Cette fonction permet de déterminer une consigne de l'état de la chaîne cinématique, optimisant au mieux le point de fonctionnement d'un Groupe Moteur Propulseur (GMP) hybride.

On rappelle qu'un état de la chaîne cinématique est défini par une combinaison d'état(s) de coupleur(s) et d'état(s) de réducteur(s) spécifiques à une architecture véhicule donnée.

Pour une boîte de vitesses d'un véhicule thermique, un exemple d'un état de la chaîne cinématique comprend un état réducteur de première engagé et un embrayage entre le moteur thermique et la boîte de vitesses fermé. Pour une boîte de vitesses d'un véhicule hybride, un exemple d'un état de la chaîne cinématique comprend un embrayage ouvert entre le moteur thermique et la boîte de vitesses reliée aux roues avant et des moteurs électriques propulsant le véhicule par les roues arrière.

Pour concevoir la fonction d'élaboration d'une consigne d'état de la chaîne cinématique, les inventeurs ont utilisé comme base d'étude, des stratégies d'optimisation du point de fonctionnement d'un Groupe Moteur Propulseur (GMP) dédiées aux véhicules thermiques et qui permettent de gérer au mieux le compromis entre les prestations attendues telles que l'acoustique, l'agrément de conduite, la consommation et les exigences de dépollution.

Les inventeurs ont ensuite vérifié si les stratégies actuelles, utilisées en série, ne permettaient pas de répondre au même besoin pour les GMP hybride. Une étude préliminaire a été donc menée pour voir si il n'était pas possible d'utiliser directement les stratégies développées pour les GMP dédiées aux véhicules thermiques pour choisir le rapport de boîte ou l'état de la chaîne cinématique le mieux adapté.

Dans le cas d'un GMP hybride, les différences significatives vues de la transmission sont les suivantes:

- Le moteur thermique n'est plus la seule source de puissance motrice,
- Pour une même puissance souhaitée, il existe une multitude de combinaisons possibles entre la puissance délivrée par le moteur thermique et celle délivrée par le(s) moteur(s) électrique(s),
- Selon la définition technique envisagée, la puissance de la machine électrique transite ou non via la transmission,
- Les limitations maximales et minimales statiques et dynamiques du GMP hybride peuvent être dépendantes de l'état de charge de la batterie, et donc variables en fonction du temps,
- le mode électrique ou ZEV, pour « Zéro Emission Vehicle », regroupe un ou plusieurs états de chaîne cinématique spécifiques possibles, au même titre que les rapports discrets.

Ainsi, l'analyse des 4 prestations que doivent vérifier les stratégies dans le cas d'un GMP hybride mène aux conclusions suivantes :
Les phénomènes acoustiques sont pour un même point de fonctionnement (Vitesse, Puissance motrice) dépendants de la répartition puissance électrique et puissance thermique. En d'autres termes, si le moteur électrique est seul à fonctionner, le GMP fait moins de bruit que si les moteurs thermique et électrique fonctionnent. Le moteur thermique est la seule source de bruit par rapport au moteur électrique.

L'agrément de conduite, c'est-à-dire les performances du GMP, peuvent être dépendants de l'état de charge de la batterie.

Ainsi, lorsque la batterie est chargée, il est possible d'utiliser en même temps la puissance délivrée par le moteur électrique et le moteur thermique. A contrario, si la batterie est déchargée, la seule source d'énergie motrice disponible est le moteur thermique, ce qui mène à une diminution possible des performances.

Pour les exigences de consommation et de dépollution, un nouveau paramètre est à prendre en compte. Il s'agit de la loi de gestion d'énergie qui a pour but de déterminer, sur chacun des états GMPs possibles, la répartition entre la puissance délivrée par le moteur thermique et celle délivrée par le moteur électrique en fonction de l'état de charge de la batterie.

L'hybridation du GMP nécessite donc de faire évoluer les stratégies actuelles. L'état de charge de la batterie est une dimension nouvelle importante à prendre en compte pour élaborer la consigne de rapport d'une transmission hybridée.

Cette prise en compte permet d'optimiser la consommation et la dépollution. En effet, l'électrification du GMP étant principalement motivée par la réduction de la consommation, cette prise en compte est incontournable. Il faut donc que les stratégies d'élaboration de la consigne d'état de la chaîne cinématique interagissent avec la loi de gestion d'énergie (LGE).

La prise en compte de l'état de charge batterie permet également d'optimiser l'agrément. La variation des contraintes d'agrément en fonction de l'état de charge de la batterie dépend de la performance du GMP souhaité. En effet, la puissance maximale du GMP dépend de la puissance des chacun des moteurs thermiques ou électriques présents et disponibles.

Cette prise en compte de l'état de charge batterie permet enfin d'optimiser l'acoustique. L'impact de cette prise en compte sur l'acoustique est moins critique que sur la consommation. On pourrait, par défaut, calibrer les seuils régimes pour une utilisation 100% thermique. Les zones sous optimisées qui en résulterait seraient vraisemblablement minimes.

En résumé, l'hybridation nécessite de revoir complètement les stratégies actuelles de contrôle d'optimisation du point de fonctionnement des GMP (le choix du rapport de boîte de vitesses) qui sont uniquement généralement orientées pour application de commande d'un véhicule totalement thermique. Ces stratégies ne prennent pas en compte les spécificités liées à l'hybridation et notamment les temps et les conditions de passages d'un état de la chaîne cinématique à un autre.

Il existe donc un besoin à ce niveau.

Un véhicule automobile équipé d'une boîte de vitesses automatique a pour but de se trouver dans un état de la chaîne cinématique optimal et ce dans toutes les conditions de roulage possibles. Un grand nombre de contraintes de type NVH (Noise, Vibration Harshness), de vitesses mécaniques de fiabilité, de brio (réserve d'accélération, demande du conducteur, etc.) et autres, permettent de garantir un comportement sain et adéquat du véhicule dans les conditions dans lequel il se trouve lorsque le conducteur désire conserver une vitesse stable ou encore accélérer.

Dans le cas d'une décélération désirée par le conducteur, l'état de la chaîne cinématique préconisé est alors fonction de ces mêmes contraintes qui ne reflètent en rien la dynamique de décélération que le véhicule devrait posséder. Ainsi l'état de la chaîne cinématique sera potentiellement non pertinent et pourrait impliquer un niveau de décélération « naturelle » (Force résistante et frein moteurs) non adéquat à la route empruntée et à sa dénivelée ou encore à la dynamique souhaitée par le conducteur au travers de faibles ou d'importants freinages.

Un exemple concret de cette problématique peut être décrit à l'aide d'un véhicule thermique évoluant dans une descente à fort coefficient. Le véhicule et plus particulièrement les stratégies de choix de l'état de la chaîne cinématique optimal peuvent avoir tendance à choisir un rapport « long » car respectant l'ensemble des contraintes NVH, brio (réserve d'accélération basse) ou autres et étant considéré comme énergétiquement meilleur que les états de chaîne cinématique « courts ». Dans ce cas précis le véhicule peut alors devenir extrêmement filant et pourra se voir même accélérer, obligeant le conducteur à freiner de manière importante pour décélérer ou même maintenir sa vitesse, voire de rétrograder manuellement en l'obligeant à passer en mode manuel

Le problème technique à résoudre est donc le suivant :
Comment faut-il procéder pour garantir un certain niveau de décélération du véhicule à travers le choix de l'état de la chaîne cinématique optimal ?

De l'état de la technique antérieur, on connait les documents suivants.

Le document FR2765652 décrit des applications à une boite de vitesses automatique (acronyme BVA) pour des véhicules non hybrides avec une fonction d'assistance au freinage conditionné à l'appui sur la pédale de frein, véhicule où on ne peut changer que d'un seul rapport à la fois.

Le document FR2875204 décrit des applications BVA non hybrides avec la fonction d'assistance au freinage conditionné à l'appui sur la pédale de frein, avec un pilotage par augmentation de la consigne de couple statique du moteur,

Le document FR2877416 décrit des applications BVA non hybrides avec la fonction d'assistance au freinage conditionné à l'appui sur la pédale de frein, avec un pilotage par estimation d'une cible de vitesse de rotation primaire.

Le document US 20080046157 décrit une stratégie qui ne fonctionne qu'avec des déterminations de rapports de transmission à partir de seuils de vitesses, qui n'est valable que pour des véhicules où on ne peut changer que d'un seul rapport à la fois, et qui ne prend pas en compte les efforts différentiels que peuvent apporter un vent de face, une pente. Les paramètres permettant de définir un rétro sont exprimés en offset de vitesse par rapport aux lignes existantes et donc sans notion d'accélération.

Le document US 20140066251 décrit une stratégie qui n'est valable que pour des véhicules où on ne peut changer que d'un seul rapport à la fois, qui ne garantit pas une décélération donnée, car elle ne se contente que d'inhiber les passages vers les rapports montants suivant le niveau de décélération donnée du véhicule. (Inhibition de tous les rapports montants, d'un rapport N+2 ou N+3), et qui ne prend pas en compte les efforts différentiels que peuvent apporter un vent de face, une pente, etc.

L'invention a pour objet un procédé de commande d'une boite de vitesses automatique pour véhicule automobile possédant au moins deux états de chaîne cinématique distincts. Le procédé comprend les étapes suivantes :

on détermine la contrainte de force de décélération minimale que doit réaliser l'état de la chaîne cinématique en fonction de la vitesse du véhicule, de l'accélération longitudinale et des efforts résistants subis par le véhicule, puis on réalise un arbitrage permettant d'autoriser ou interdire l'état de la chaîne cinématique pour lequel la contrainte de force de décélération minimale a été calculée en fonction de la consigne de force de décélération, de l'état courant de la chaine cinématique et de la force minimale réalisable par l'état concerné de la chaine cinématique.

Pour déterminer la contrainte de force de décélération minimale que doit réaliser l'état de la chaîne cinématique, on peut réaliser les étapes suivantes :

on détermine la décélération souhaitée du véhicule en levé de pied accélérateur par l'intermédiaire d'une première cartographie fonction du programme de typage du véhicule et de sa vitesse courante, puis
on détermine une force différentielle comme la différence entre la force résistante théorique sur une route à pente nulle, à masse prédéfinie et sans vent et la force résistante estimée instantanément tenant conditions de roulage en cours, puis
on détermine un paramètre correctif par décalage par l'intermédiaire d'une deuxième cartographie fonction de la force différentielle, puis
on détermine une décélération du véhicule souhaitée avec la prise en compte des efforts différentiels, issue de la somme de la décélération souhaitée du véhicule en levé de pied accélérateur et du paramètre correctif par décalage, puis
on détermine la force de décélération globale en fonction de la décélération souhaitée et de la masse véhicule, puis
on détermine la force que doit fournir l'état de la chaîne cinématique comme la somme des efforts résistants et de la force de décélération globale, puis
on somme une valeur de décalage de force et la contrainte de décélération afin de déterminer la force de décélération en levé de pied avec ou sans freinage que devra respecter un état de la chaîne cinématique, puis
on détermine la valeur maximale entre la force de décélération en levé de pied avec ou sans freinage et la consigne de force au niveau des roues requise par le conducteur, puis
on sature la valeur maximale ainsi déterminée de sorte qu'elle soit négative ou nulle, la valeur saturée correspondant à la contrainte de force de décélération minimale que doit réaliser l'état de la chaîne cinématique.

On peut déterminer si l'état de chaine cinématique pour lequel la contrainte de force de décélération minimale est déterminée est l'état courant,
[0032] Si tel est le cas, on peut employer une première cartographie alternative moins contraignante que la première cartographie employée lorsque l'état de chaine cinématique pour lequel la contrainte de force de décélération minimale est déterminée n'est pas l'état courant.
Pour déterminer une valeur de décalage de force, on peut réaliser les étapes suivantes :

on détermine si l'appui sur la pédale de frein est maintenu pendant une durée minimale et si l'accélération longitudinale du véhicule est inférieure à 0,
Si tel est le cas, on fixe l'accélération véhicule pendant le freinage égale à la valeur d'accélération longitudinale,
Si tel n'est pas le cas, l'accélération véhicule pendant le freinage est fixée à 0,
on détermine la valeur de décalage d'accélération par l'intermédiaire de cartographies fonction de l'accélération véhicule durant le freinage et de la vitesse véhicule, la cartographie utilisée dépend du programme de typage du véhicule,
on multiplie la valeur de décalage d'accélération par la masse véhicule afin d'obtenir la valeur de décalage de force.

Pour déterminer l'autorisation ou l'interdiction d'un état de chaine cinématique, on peut réaliser les étapes suivantes :

on autorise l'état de la chaîne cinématique si, simultanément, l'état de chaine cinématique est l'état courant et si la force minimale disponible sur celui-ci est inférieure ou égale à la consigne de force de décélération déterminée pour l'état courant,
on autorise également l'état de la chaîne cinématique si, simultanément, l'état de chaine cinématique n'est pas l'état courant et si la force minimale disponible sur celui-ci est inférieure ou égale à la consigne de force de décélération déterminée pour les états non courants,
sinon on interdit l'état de la chaîne cinématique.

Ce procédé présente plusieurs avantages, parmi lesquels on peut citer une facilité de mise en place, un caractère temps réel permettant de prendre en compte des paramètres véhicules évolutifs (Forces minimales sur les états de transitions, forces extérieures, appui frein, etc.) et une couverture de l'ensemble des architectures GMP Hybrides, y compris purement thermique et purement électrique possédant une transmission avec au moins deux états chaîne cinématique distincts.
D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principales étapes d'un procédé de commande d'une boite de vitesses automatique selon l'invention,
- la figure 2 illustre les principales sous-étapes de la première étape du procédé de commande, et
- la figure 3 illustre d'autres sous-étapes de la première étape du procédé de commande.

Le procédé de commande développé a pour but d'interdire les états de chaîne cinématique ne satisfaisant pas une contrainte de décélération élaborée en fonction des conditions de roulage.

Ce procédé peut être utilisé pour l'ensemble des véhicules thermiques, hybrides et électriques équipés d'une transmission automatique, présentant ou non une rupture partielle ou totale du couple de traction et possédant au moins deux états de chaîne cinématique distincts.

Son principe de fonctionnement consiste à calculer une contrainte de force que doit fournir un état de la chaîne cinématique afin d'assurer un niveau de décélération donné.

Un certain nombre de paramètres physiques liés au véhicule rentrent donc en compte dans ce calcul :

- Estimation des efforts résistants (Pente, vent, etc.),
- Consigne de force ou de Couple aux Roues conducteur réel ou virtuel (ADAS type RV/LV,ACC,...),
- Accélération longitudinale du véhicule,
- Vitesse véhicule,
- Masse du véhicule,
- Forces minimales possibles sur les états de chaîne cinématique.

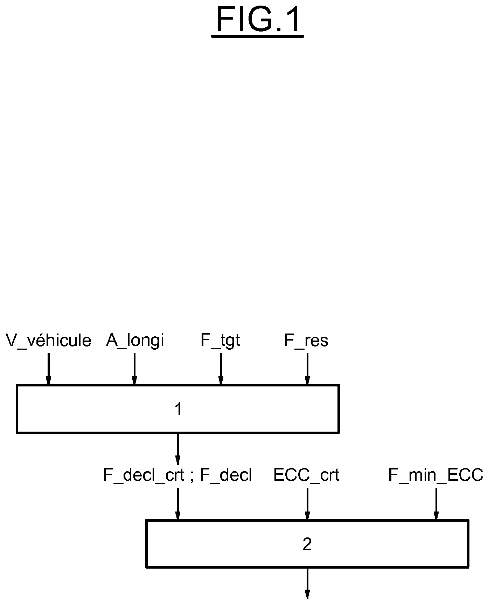

Les principales étapes et sous-étapes du procédé de commande sont illustrées par les figures 1, 2 et 3 suivantes.

Le procédé de commande comprend plusieurs étapes amenant à l'interdiction ou à l'autorisation d'un état de la chaîne cinématique (acronyme ECC) en fonction de la comparaison d'une contrainte liée aux situations de décélération à la capacité de décélération de l'état de chaine cinématique en cours ou envisagé.

Le mécanisme décrit ci-dessous pour un état de consigne est réalisé de manière identique pour l'ensemble des états de chaîne cinématique cibles potentiels du GMP.

Sur la figure 1, on peut voir les deux principales étapes du procédé de commande. Au cours d'une première étape 1, on détermine la contrainte de force de décélération minimale que doit réaliser l'état de la chaîne cinématique F_decl_crt et F_decl selon que l'état de chaine cinématique est identique ou non au mode courant. Au cours d'une deuxième étape 2, on réalise un arbitrage permettant d'autoriser ou interdire l'état de la chaîne cinématique pour lequel la contrainte de force de décélération minimale a été calculée.

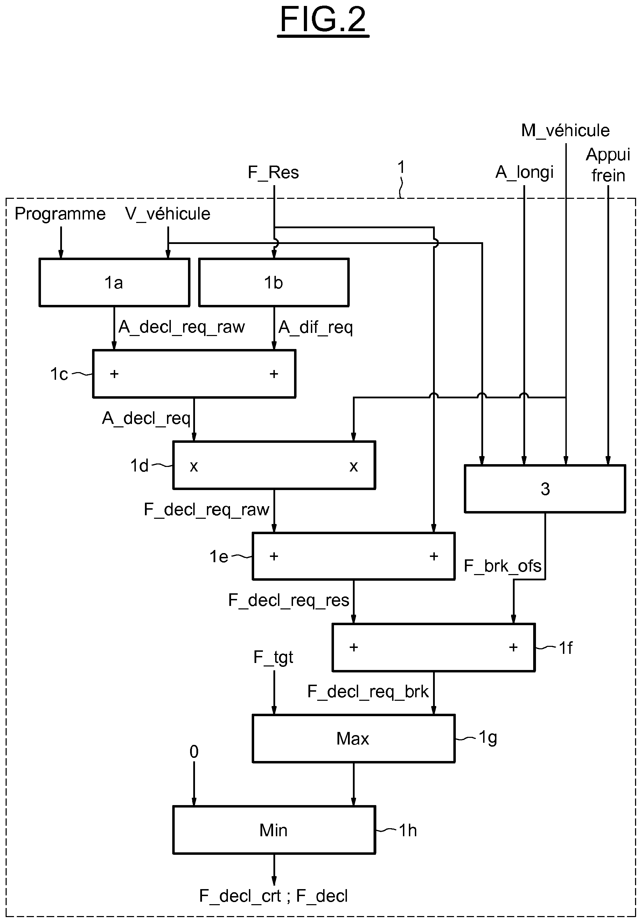

La première étape 1 va maintenant être décrite et est illustrée par la figure 2.

Au cours d'une première sous étape 1a, on détermine la décélération souhaitée du véhicule en levé de pied accélérateur A_decl_req_raw par l'intermédiaire d'une cartographie A_req fonction du programme de typage du véhicule (éco, normal, sport, etc.) et de sa vitesse courante V véhicule. La décélération souhaitée du véhicule en levé de pied accélérateur A_decl_req_raw est une accélération négative.

Au cours d'une deuxième sous étape 1b, on détermine une force différentielle F_dif comme la différence entre la force résistante théorique sur une route à pente nulle, à masse prédéfinie et sans vent et la force résistante estimée instantanément représentant donc la force résistante supplémentaire due aux conditions de roulage en cours, puis on détermine un paramètre correctif par décalage A_dif_req par l'intermédiaire d'une deuxième cartographie fonction de la force différentielle F dif.

Ce paramètre correctif par décalage A_dif_req (de type « offset » en langue anglaise) a pour rôle de limiter l'impact des forces résistives supplémentaires sur le calcul final des contraintes de décélération.

Au cours d'une troisième sous étape 1c, on détermine une décélération véhicule souhaitée avec la prise en compte des efforts différentiels A_decl_req, issue de la somme de la décélération souhaitée du véhicule en levé de pied accélérateur A_decl_req_raw et du paramètre correctif par décalage A_dif_req.

Ainsi à vitesses de véhicule égales, la décélération souhaitée A_decl_req pourra ne pas être la même suivant la dénivelée de la route empruntée que représente majoritairement F_dif.

Au cours d'une quatrième sous étape 1d, on détermine la force de décélération globale F_decl_req_raw en fonction de la décélération souhaitée A_decl_req et de la masse véhicule M_véhicule.

Cette force de décélération globale F_decl_req_raw est la force nécessaire pour réaliser la décélération requise et inclut à la fois les efforts résistants et la force fournie par le groupe motopropulseur via l'état de la chaîne cinématique.

Au cours d'une cinquième étape 1e, on détermine la force F_decl_req_res que doit fournir un état de la chaîne cinématique comme la somme des efforts résistants F_res et de la force de décélération globale F_decl_req_raw.

Les efforts résistants F_res correspondent aux forces freinant l'avancement du véhicule et inversement, calculés à partir de la dynamique du véhicule (Accélération longitudinale), de la masse théorique du véhicule et de la force de traction réalisée à la roue par le GMP.

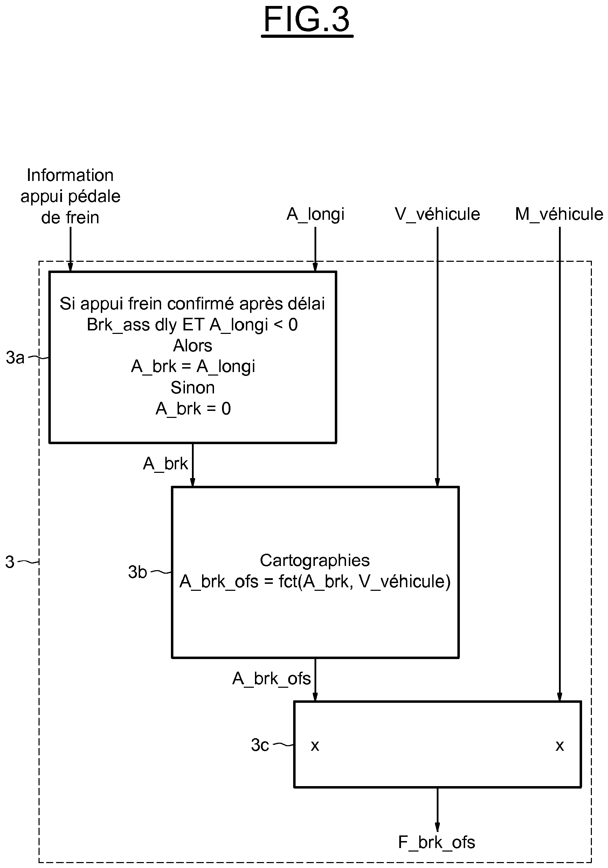

Il est par ailleurs important de prendre en compte la dynamique du véhicule demandée par le conducteur. Le frein moteur et donc le niveau de décélération que doit fournir un état de la chaîne cinématique, n'est pas être le même dans le cas d'un simple levé de pied (pédale d'accélérateur au repos) et dans le cas d'un freinage, faible ou plus important. La sous étape 3 permet de prendre en compte cet aspect dynamique en calculant une valeur de décalage de force F_brk_ofs. Par soucis de clarté, cette sous étape 3 sera décrite plus bas en relation avec la figure 3.

Au cours d'une sous étape 1f, on somme la valeur de décalage de force F_brk_ofs et la contrainte de décélération F_decl_req_res afin de déterminer la force de décélération en levé de pied avec ou sans freinage F_decl_req_brk que devra respecter un état de la chaîne cinématique.

Au cours d'une sous étape 1g, on détermine la valeur maximale entre la force de décélération en levé de pied avec ou sans freinage F_decl_req_brk et la consigne de force F_tgt au niveau des roues requise par le conducteur réel à partir de la position pédale accélérateur ou des requêtes virtuel (ADAS type RV/LV,ACC,...).

Ensuite, au cours d'une sous étape 1h, on sature la valeur maximale ainsi déterminée de sorte qu'elle soit négative ou nulle. La valeur saturée correspond à la contrainte de décélération finale F_decl.

Les sous étapes 1g et 1h peuvent être déterminées simultanément par application de la formule suivante :

$$F\_decl = Min\bigl(Max(F\_tgt; F\_decl\_req\_brk); 0\bigr) \qquad\text{(Eq. 1)}$$

Ce calcul de F_decl est valable pour l'ensemble des états de chaîne cinématique, hors état de chaine cinématique courant.

Dans le cas d'un état de chaine cinématique courant, on calcule une deuxième contrainte de décélération F_decl_crt de manière identique au calcul de F_decl à la différence près que la cartographie A_req de décélération brute souhaitée diffère en étant moins contraignantes par rapport aux autres états de chaine cinématique. Cette distinction entre état de chaine cinématique courant ou non est ainsi faite afin d'éviter tout risque de pompage d'autorisation/interdiction d'un état de la chaîne cinématique et fonctionne à la manière d'un mécanisme d'hystérésis.

La sous étape 3 mentionnée plus haut va maintenant être décrite en rapport avec la figure 3.

On détermine d'abord la valeur prise par l'accélération véhicule pendant le freinage A_brk selon les conditions de roulage. Plus précisément, au cours d'une première sous étape 3a, on détermine si l'appui sur la pédale de frein est maintenu pendant une durée minimale Brk_ass_dly et si l'accélération longitudinale du véhicule A_longi est inférieure à 0.

Si tel est le cas, on fixe l'accélération véhicule pendant le freinage A_brk égale à la valeur d'accélération longitudinale A_longi. Le procédé se poursuit par le calcul d'une valeur de décalage d'accélération A_brk_ofs à l'étape 3b.

Si tel n'est pas le cas, l'accélération véhicule pendant le freinage A_brk est fixée à 0. Le procédé se poursuit également par le calcul d'une valeur de décalage d'accélération A_brk_ofs à l'étape 3b. Toutefois, les valeurs de décalage calculées sont nulles du fait de la valeur nulle de l'accélération véhicule pendant le freinage Ces valeurs de décalage ont donc un impact nul sur les contraintes de décélération.

Au cours d'une sous étape 3b, on détermine la valeur de décalage d'accélération A_brk_ofs par l'intermédiaire de cartographies fonction de l'accélération véhicule durant le freinage A_brk et de la vitesse véhicule V_véhicule. Le choix de la cartographie à utiliser dépend du programme de typage du véhicule, permettant ainsi d'adapter le niveau de la décélération fourni directement par le GMP et donc par l'état chaîne cinématique, à l'utilisation du véhicule en fournissant une part importante de la décélération dans un programme Sport soulageant en partie les freins ou une part faible dans un programme Eco où les freins seront sollicités de manière moindre.

La valeur de décalage d'accélération obtenue A_brk_ofs correspond alors au surplus de décélération du groupe motopropulseur désiré pour aider à la décélération du véhicule.

Au cours d'une sous étape 3c, on multiplie la valeur de décalage d'accélération A_brk_ofs par la masse véhicule M_véhicule afin d'obtenir la force supplémentaire que devra fournir un état de la chaîne cinématique pour faciliter la décélération du véhicule lors d'un freinage plus ou moins important. Cette force supplémentaire correspond à la valeur de décalage de force F_brk_ofs.

La deuxième étape 2 va maintenant être décrite en rapport avec la figure 1. Au cours de la deuxième étape 2, on détermine l'autorisation ou l'interdiction d'un état de chaine cinématique en fonction des consigne de force de décélération (F_decl ; F_decl_crt), de l'état courant de la chaine cinématique ECC_crt et de la force minimale réalisable par l'état de la chaine cinématique concerné F_min_ECC.

L'état de la chaîne cinématique est autorisé si :

- L'état concerné est l'état courant FCC_crt et la force minimale disponible sur celui-ci Fmin_ECC est inférieure ou égale à la consigne de force de décélération pour l'état courant F_decl_crt.
- L'état concerné n'est pas l'état courant ECC_crt et la force minimale disponible sur celui-ci Fmin_ECC est inférieure ou égale à la consigne de force de décélération pour les états non courants F_decl.

Dans les cas contraires, le résultat de l'étape 2 d'arbitrage est un état de la chaîne cinématique interdit car il ne satisfaisait pas les contraintes de décélération élaborées.

**Revendications**

1. Procédé de commande d'une boite de vitesses automatique pour véhicule automobile possédant au moins deux états de chaîne cinématique distincts, **caractérisé en ce qu'**il comprend les étapes suivantes :

   on détermine la contrainte de force de décélération minimale que doit réaliser l'état de la chaîne cinématique en fonction de la vitesse du véhicule, de l'accélération longitudinale et des efforts résistants subis par le véhicule, puis
   on réalise un arbitrage permettant d'autoriser ou interdire l'état de la chaîne cinématique pour lequel la contrainte de force de décélération minimale a été calculée en fonction de la consigne de force de décélération, de l'état courant de la chaine cinématique et de la force minimale réalisable par l'état concerné de la chaine cinématique.

2. Procédé selon la revendication précédente, dans lequel, pour déterminer la contrainte de force de décélération minimale que doit réaliser l'état de la chaîne cinématique, on réalise les étapes suivantes :

   on détermine la décélération souhaitée du véhicule en levé de pied accélérateur par l'intermédiaire d'une première cartographie fonction du programme de typage du véhicule et de sa vitesse courante, puis
   on détermine une force différentielle comme la différence entre la force résistante théorique sur une route à pente nulle, à masse prédéfinie et sans vent et la force résistante estimée instantanément tenant conditions de roulage en cours, puis
   on détermine un paramètre correctif par décalage par l'intermédiaire d'une deuxième cartographie fonction de la force différentielle, puis
   on détermine une décélération du véhicule souhaitée avec la prise en compte des efforts différentiels, issue de la somme de la décélération souhaitée du véhicule en levé de pied accélérateur et du paramètre correctif par décalage, puis
   on détermine la force de décélération globale en fonction de la décélération souhaitée et de la masse véhicule, puis
   on détermine la force que doit fournir l'état de la chaîne cinématique comme la somme des efforts résistants et de la force de décélération globale, puis
   on somme une valeur de décalage de force et la contrainte de décélération afin de déterminer la force de décélération en levé de pied avec ou sans freinage que devra respecter un état de la chaîne cinématique, puis
   on détermine la valeur maximale entre la force de décélération en levé de pied avec ou sans freinage et la consigne de force au niveau des roues requise par le conducteur, puis
   on sature la valeur maximale ainsi déterminée de sorte qu'elle soit négative ou nulle, la valeur saturée correspondant à la contrainte de force de décélération minimale que doit réaliser l'état concerné de la chaîne cinématique.

3. Procédé selon la revendication 2, dans lequel on détermine si l'état de chaine cinématique pour lequel la contrainte de force de décélération minimale est déterminée est l'état courant,
   si tel est le cas, on emploie une première cartographie alternative moins contraignante que la première cartographie employée lorsque l'état de chaine cinématique pour lequel la contrainte de force de décélération minimale est déterminée n'est pas l'état courant.

4. Procédé selon l'une quelconque des revendications 2 ou 3, dans lequel, pour déterminer une valeur de décalage de force, on réalise les étapes suivantes :

   on détermine si l'appui sur la pédale de frein est maintenu pendant une durée minimale et si l'accélération longitudinale du véhicule est inférieure à 0,
   si tel est le cas, on fixe l'accélération véhicule pendant le freinage égale à la valeur d'accélération longitudinale,
   si tel n'est pas le cas, l'accélération véhicule pendant le freinage est fixée à 0,
   on détermine la valeur de décalage d'accélération par l'intermédiaire de cartographies fonction de l'accélération véhicule durant le freinage et de la vitesse véhicule, la cartographie utilisée dépend du programme de typage du véhicule,
on multiplie la valeur de décalage d'accélération par la masse véhicule afin d'obtenir la valeur de décalage de force.

5. Procédé selon l'une quelconque des revendications précédentes, dans lequel, pour déterminer l'autorisation ou l'interdiction d'un état de chaine cinématique, on réalise les étapes suivantes :

on autorise l'état de la chaîne cinématique si, simultanément, l'état de chaine cinématique est l'état courant et si la force minimale disponible sur celui-ci est inférieure ou égale à la consigne de force de décélération déterminée pour l'état courant,
on autorise également l'état de la chaîne cinématique si, simultanément, l'état de chaine cinématique n'est pas l'état courant et si la force minimale disponible sur celui-ci est inférieure ou égale à la consigne de force de décélération déterminée pour les états non courants,
sinon on interdit l'état de la chaîne cinématique.

**Patentansprüche**

1. Verfahren zur Steuerung eines Automatikgetriebes für ein Kraftfahrzeug, welches mindestens zwei verschiedene Antriebsstrangzustände besitzt, **dadurch gekennzeichnet, dass** es die folgenden Schritte umfasst:

Es wird die Nebenbedingung für die minimale Verzögerungskraft, welche der Zustand des Antriebsstrangs erfüllen muss, in Abhängigkeit von der Geschwindigkeit des Fahrzeugs, von der Längsbeschleunigung und von den Fahrwiderständen, die das Fahrzeug überwinden muss, bestimmt, danach wird eine Arbitrierung durchgeführt, die es ermöglicht,
den Zustand des Antriebsstrangs, für welchen die Nebenbedingung für die minimale Verzögerungskraft berechnet worden ist, in Abhängigkeit vom Sollwert der Verzögerungskraft, vom aktuellen Zustand des Antriebsstrangs und von der minimalen Kraft, die durch den betreffenden Zustand des Antriebsstrangs realisierbar ist, zu genehmigen oder zu verbieten.

2. Verfahren nach dem vorhergehenden Anspruch, wobei, um die Nebenbedingung für die minimale Verzögerungskraft zu bestimmen, welche der Zustand des Antriebsstrangs erfüllen muss, die folgenden Schritte durchgeführt werden:

Es wird die gewünschte Verzögerung des Fahrzeugs beim Abheben des Fußes vom Fahrpedal über ein erstes Kennfeld in Abhängigkeit vom Typprogramm des Fahrzeugs und von seiner aktuellen Geschwindigkeit bestimmt, danach
wird eine Differenzkraft als die Differenz zwischen der theoretischen Widerstandskraft auf einer Straße mit Anstieg null, bei vordefinierter Masse und ohne Wind und der momentan geschätzten Widerstandskraft unter Berücksichtigung der gegenwärtigen Fahrbedingungen bestimmt, danach
wird ein Korrekturparameter durch Versatz über ein zweites Kennfeld in Abhängigkeit von der Differenzkraft bestimmt, danach
wird eine gewünschte Verzögerung des Fahrzeugs mit Berücksichtigung der Differenzkräfte bestimmt, die sich aus der Summe der gewünschten Verzögerung des Fahrzeugs beim Abheben des Fußes vom Fahrpedal und des Korrekturparameters durch Versatz ergibt, danach wird die Gesamtverzögerungskraft in Abhängigkeit von der gewünschten Verzögerung und der Masse des Fahrzeugs bestimmt, danach
wird die Kraft, welche der Zustand des Antriebsstrangs liefern muss, als die Summe der Fahrwiderstände und der Gesamtverzögerungskraft bestimmt, danach werden ein Versatzwert der Kraft und die Nebenbedingung für die Verzögerung addiert, um die Verzögerungskraft beim Abheben des Fußes mit oder ohne Bremsung zu bestimmen, welche ein Zustand des Antriebsstrangs beachten muss, danach
wird der maximale Wert von der Verzögerungskraft beim Abheben des Fußes mit oder ohne Bremsung und dem vom Fahrer geforderten Sollwert der Kraft an den Rädern bestimmt, danach
wird der so bestimmte maximale Wert derart gesättigt, dass er negativ oder null ist, wobei der gesättigte Wert der Nebenbedingung für die minimale Verzögerungskraft entspricht, welche der betreffende Zustand des Antriebsstrangs erfüllen muss.

3. Verfahren nach Anspruch 2, wobei bestimmt wird, ob der Zustand des Antriebsstrangs, für welchen die Nebenbedingung für die minimale Verzögerungskraft bestimmt wird, der aktuelle Zustand ist,
und wenn dies der Fall ist, ein alternatives erstes Kennfelds verwendet wird, das weniger einschränkend als das erste Kennfeld ist, das verwendet wird, wenn der Zustand des Antriebsstrangs, für welchen die Nebenbedingung für die minimale Verzögerungskraft bestimmt wird, nicht der aktuelle Zustand ist.

4. Verfahren nach einem der Ansprüche 2 oder 3, wobei, um einen Versatzwert der Kraft zu bestimmen, die folgenden Schritte durchgeführt werden:

Es wird bestimmt, ob der Druck auf das Bremspedal während einer minimalen Dauer aufrechterhalten wird und ob die Längsbeschleunigung des Fahrzeugs kleiner als 0 ist,
wenn dies der Fall ist, wird die Beschleunigung des Fahrzeugs während des Bremsens als gleich dem Wert der Längsbeschleunigung festgelegt,
wenn dies nicht der Fall ist, wird die Beschleunigung des Fahrzeugs während des Bremsens als 0 festgelegt,
es wird der Versatzwert der Beschleunigung über Kennfelder in Abhängigkeit von der Beschleunigung des Fahrzeugs während des Bremsens und von der Geschwindigkeit des Fahrzeugs bestimmt, wobei das verwendete Kennfeld vom Typprogramm des Fahrzeugs abhängt,
es wird der Versatzwert der Beschleunigung mit der Masse des Fahrzeugs multipliziert, um den Versatzwert der Kraft zu erhalten.

5. Verfahren nach einem der vorhergehenden Ansprüche, wobei, um die Genehmigung oder das Verbot eines Zustands des Antriebsstrangs zu bestimmen, die folgenden Schritte durchgeführt werden:

Der Zustand des Antriebsstrangs wird genehmigt, falls gleichzeitig der Zustand des Antriebsstrangs der aktuelle Zustand ist und die an diesem verfügbare minimale Kraft kleiner oder gleich dem Sollwert der Verzögerungskraft ist, der für den aktuellen Zustand bestimmt wurde,
der Zustand des Antriebsstrangs wird ebenfalls genehmigt, falls gleichzeitig der Zustand des Antriebsstrangs nicht der aktuelle Zustand ist und die an diesem verfügbare minimale Kraft kleiner oder gleich dem Sollwert der Verzögerungskraft ist, der für die nicht aktuellen Zustände bestimmt wurde,
andernfalls wird der Zustand des Antriebsstrangs verboten.

## Claims

1. Method for controlling an automatic gearbox for a motor vehicle having at least two different drivetrain states, **characterized in that** it comprises the following steps:

determining the minimum deceleration force constraint that needs to be produced by the drivetrain state as a function of the speed of the vehicle, the longitudinal acceleration and the resistive forces on the vehicle,
then taking a decision in order to authorize or prohibit the drivetrain state for which the minimum deceleration force constraint has been calculated as a function of the deceleration force target, the current drivetrain state and the minimum force that can be produced by the drivetrain state in question.

2. Method according to the preceding claim, in which, to determine the minimum deceleration force constraint that the drivetrain state must produce, the following steps are executed:

determining the required deceleration of the vehicle with the foot lifted off the accelerator by means of a first map as a function of the type program of the vehicle and its current speed,
then determining a differential force as the difference between the theoretical resistive force on a road of zero slope, with predefined mass and without wind, and the instantaneously estimated resistive force taking account of current rolling conditions,
then determining an offset corrective parameter by means of a second map as a function of the differential force, then determining a required deceleration of the vehicle taking into account the differential forces resulting from the sum of the required deceleration of the vehicle with the foot lifted off the accelerator and the offset corrective parameter,
then determining the overall deceleration force as a function of the required deceleration and the mass of the vehicle,
then determining the force that the drivetrain state must produce as the sum of the resistive forces and the overall deceleration force,
then summing a force offset value and the deceleration constraint in order to determine the deceleration force with the foot lifted off the accelerator with or without braking that a drivetrain state must comply with,

then determining which of the deceleration force with the foot lifted off the accelerator with or without braking and the force target at the level of the wheels required by the driver has the greater value,

then saturating the maximum value determined in this way so that it is negative or zero, the saturated value corresponding to the minimum deceleration force constraint that the drivetrain state in question must achieve.

3. Method according to Claim 2, in which it is determined if the drivetrain state for which the minimum deceleration force constraint is determined is the current state,

if so, a first alternative map is used that is less constraining than the first map used if the drivetrain state for which the minimum deceleration force constraint is determined is not the current state.

4. Method according to either one of Claims 2 and 3, in which, to determine a force offset value, the following steps are executed:

determining if the depression of the brake pedal is maintained for a minimum duration and if the longitudinal acceleration of the vehicle is less than 0,

if so, the vehicle acceleration during braking is made equal to the longitudinal acceleration value,

if not, the vehicle acceleration during braking is set at 0,

determining the acceleration offset value by means of maps as a function of the vehicle acceleration during braking and of the vehicle speed, the map used depending on the vehicle type program,

multiplying the acceleration offset value by the vehicle mass in order to obtain the force offset value.

5. Method according to any one of the preceding claims, in which, to determine whether to authorize or to prohibit a drivetrain state, the following steps are executed:

authorizing the drivetrain state if, simultaneously, the drivetrain state is the current state and the minimum force available therein is less than or equal to the deceleration force target determined for the current state,

also authorizing the drivetrain state if, simultaneously, the drivetrain state is not the current state and the minimum force available therein is less than or equal to the deceleration force target determined for the non-current states,

otherwise prohibiting the drivetrain state.

EP 3 237 260 B1

# FIG.1

11

# FIG.2

Programme V_véhicule F_Res 1 M_véhicule A_longi Appui frein

| 1a | | 1b |

A_decl_req_raw A_dif_req

1c + +

A_decl_req

1d x x

F_decl_req_raw

| 3 |

1e + +

F_brk_ofs

F_decl_req_res

+ + ~1f

F_tgt F_decl_req_brk

Max ~1g

0

Min ~1h

F_decl_crt ; F_decl

# FIG.3

Information
appui pédale
de frein          A_longi      V_véhicule      M_véhicule

3a

Si appui frein confirmé après délai
Brk_ass dly ET A_longi < 0
Alors
A_brk = A_longi
Sinon
A_brk = 0

A_brk

3

3b

Cartographies
A_brk_ofs = fct(A_brk, V_véhicule)

A_brk_ofs

3c    x                    x

F_brk_ofs

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19524914 A
- DE 4037248 A
- FR 2765652
- FR 2875204
- FR 2877416
- US 20080046157 A
- US 20140066251 A